# EUROPEAN PATENT SPECIFICATION

(11) **EP 2 480 447 B1**
(45) Date of publication and mention of the grant of the patent: **02.03.2016**
(21) Application number: 11764958.2
(22) Date of filing: 08.04.2011
(51) Int. Cl.: B62M 11/18, B60L 15/20, B62M 11/00, B62M 25/00, B60K 7/00, B60L 15/36, B62M 11/16, B60L 11/00, B60L 15/38, F16H 3/54, B62M 6/45

(54) **AUTOMATIC MOTORISED DERAILLEUR**
AUTOMATISCHE MOTORISIERTE KETTENSCHALTUNG
DÉRAILLEUR MOTORISÉ AUTOMATIQUE

(30) Priority: 09.04.2010 AU 2010901502
(43) Date of publication of application: 01.08.2012
(73) Proprietor: EBM Solutions Pty Ltd, Adelaide, SA 5000 (AU)
(72) Inventor: YIP, Colin, Adelaide, SA 5000 (AU)
(74) Representative: ABG Patentes, S.L.
(86) International application number: PCT/AU2011/000408
(87) International publication number: WO 2011/123901

(56) References cited:
- FR-A- 870 657
- GB-A- 1 512 106
- GB-A- 2 277 562
- GB-A- 2 297 364
- US-A- 5 222 572
- US-A1- 2009 026 727
- US-A1- 2010 016 121
- US-A1- 2010 304 913

## Description

### FIELD OF THE INVENTION

The field of the present invention relates to electromechanical devices, specifically for devices used to change gears on a vehicle such as a bicycle.

### DESCRIPTION OF THE PRIOR ART

As a green, environmental-friendly means of transport, the electric bikes, electric vehicles for the disabilities, etc. are widely used. At present such electric vehicles are mainly driven by DC motors with permanent magnets, without using any derailleur at all due to a number of complications with such DC motor set ups.

One of the defects of this kind of motor is that when the speed of the motor is low, the output torque is small, and during the start or when climbing a slope the output torque of the motor is insufficient, with excessive current and low efficiency. Especially for steep slopes, it is difficult for the vehicle to run.

For a long time, people have wanted to overcome this shortcoming, so as to improve the performance of electric vehicles; however no effective progress has been made. The present invention fills this gap. Since the invention of this derailleur and motor are made in one body, it can become a discrete component, with auto speed change according to the speed of the vehicle.

For the purposes of this document the term "derailleur" refers to a device that can change gears in/on a vehicle,

### OBJECT OF THE INVENTION

An object of the present invention is to provide automatic motorised derailleur for an electric vehicle that is efficient over prior art devices, such as in document US 2010 0016 121.

D1= US20100016121 is considered the closest prior art describing a bicycle transmission for an electric motor providing a one-way output irrespective of the rotational direction of an input and can perform deceleration or acceleration of the output when the direction of the input is changed. The motor embedded in the transmission is a brushless motor of a relatively high torque, and hence, can be sufficiently driven just by a two-stage transmission without a multi-stage transmission.

### SUMMARY OF THE INVENTION

According to the present invention, in accordance with claim 1, there is provided a derailleur for an electric vehicle, which can change the speed ratio automatically according to the speed of the electric vehicle.

The derailleur further provides that when the electric vehicle is running in low speed, the motor turns in a reverse direction.

The derailleur further provides that when the electric vehicle reaches a predefined speed, the motor will switch to a forward turning status automatically.

In preference, the ring gear is co-axially fixed to the second rotor body.

In preference, the second overrunning clutch fits within the first overrunning clutch.

In preference, the ring gear is operatively connected to the second rotor body.

In preference, the second rotor body is in communication with a drive system for a vehicle.

In preference, the drive system is a driving chain wheel of a bicycle.

By making use of the forward and reverse rotation of the motor, a planetary gear train, and two clutches, we can construct an auto-switching transmission. When the vehicle is under slow speed, the motor is under reverse rotation, the rotor is connected to the planetary gear train through a clutch, driving the wheels to rotate after slowing down; when the vehicle reaches the normal speed, the motor automatically switches to the forward rotation state, the clutch and planetary gear train are disengaged, the rotor through another clutch directly drives the wheels to rotate, or through another derailleur, drive the wheels to rotate at a higher speed. In this way, regardless if the vehicle's speed is fast or slow, the rotor of the motor rotates in considerable speed, ensuring the motor is in a better working condition.

### BRIEF DESCRIPTION OF THE DRAWINGS

By way of example, an employment of the invention is described more fully the renown for with reference to the accompanying drawings, in which:
Figure 1 is a schematic overview of the gear system of the present invention;
Figure 2 shows a outer view of the gear system of the present invention;

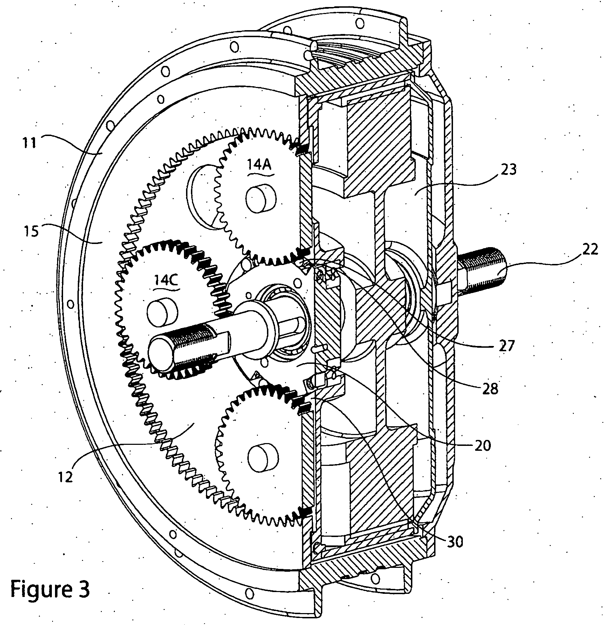

Figure 3 shows a cut away view of the gear system shown in figure 1;

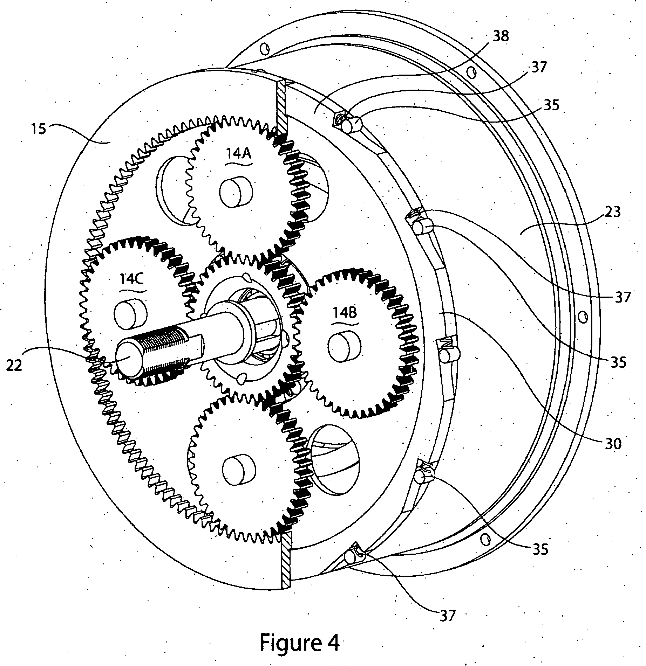

Figure 4 is a view of figure 1 with the cut away view of the outer planetary gear system;

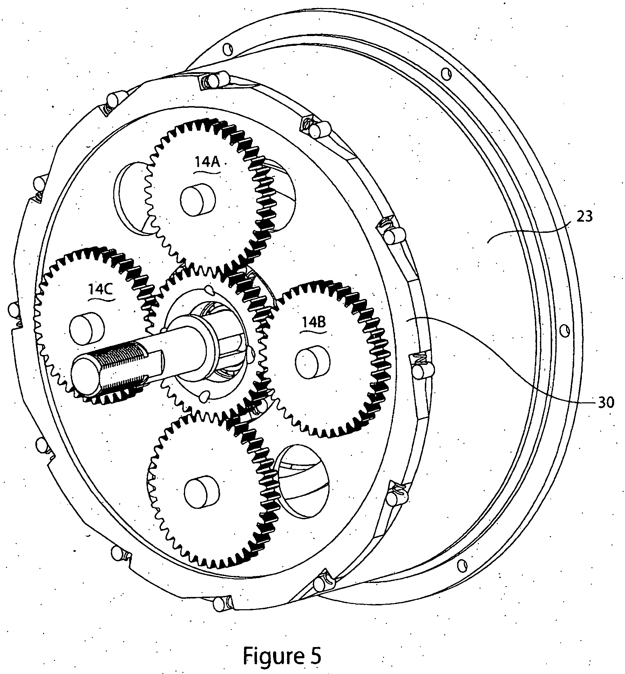

Figure 5 is a view of the inner section of the gear system shown in figure 1.

### DETAILED DESCRIPTION OF THE INVENTION

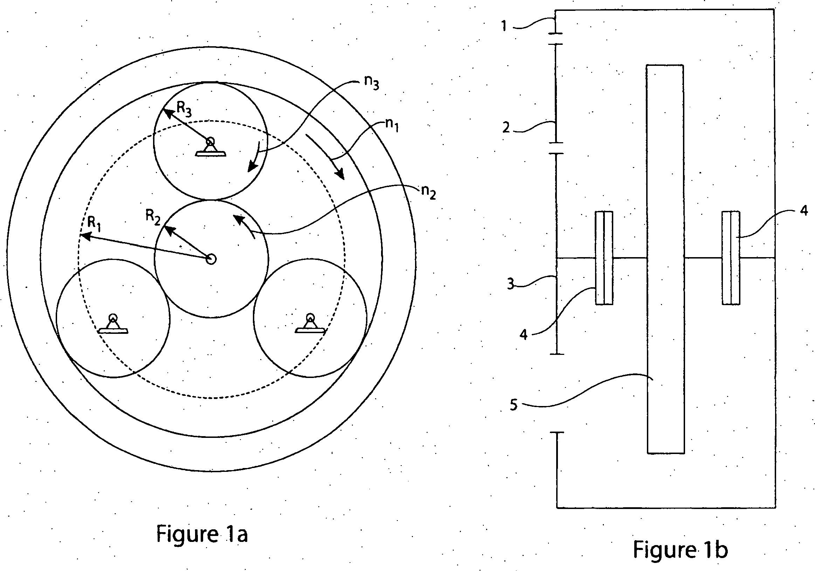

The technical schematic diagram is shown in Fig. 1, (1) is the internal gear, which connects firmly to wheels; (2) is the planetary gear, 3 pieces in total, their positions are fixed and the wheels are in rotation only; (3) is the centre wheel. (1), (2) and (3) constitute a planetary gear train. Because the positions of the planetary gear are fixed, the rotation of the internal gear and the centre wheel is in opposite direction. (4) is the clutch, 2 pieces in total.

The clutch can be an overrunning clutch, or other clutch, such as a ratchet. (5) represents the rotor. In addition to the technical scheme shown in the diagram, there is a controller which drives the motor in forward and reverse rotating direction. The controller can set the direction of the rotor rotation according to a designed vehicle speed automatically. When the vehicle speed is less than set speed, the rotor rotates in reverse direction. On the contrary, the rotor is under forward rotation. This set vehicle speed is called switching speed.

When the rotor rotates in reverse direction, the left clutch in Fig. 1 is engaging, while the right clutch is disengaged. Through the left clutch, the rotor drives the planetary gear train and the wheels to rotate. By selecting the diameter of the centre wheel and the internal gear, a reasonable speed ratio can be obtained. In this way, even the speed of the vehicle is not high the rotor speed is comparably higher.

When the rotor rotates in forward direction, the left clutch disengages while the right clutch engages with the rotor it then drives the wheels directly to rotate through the right clutch. A derailleur can also be installed between the right clutch and the wheels, so as to provide a better working condition for the motor.

All of the above control actions are done automatically.

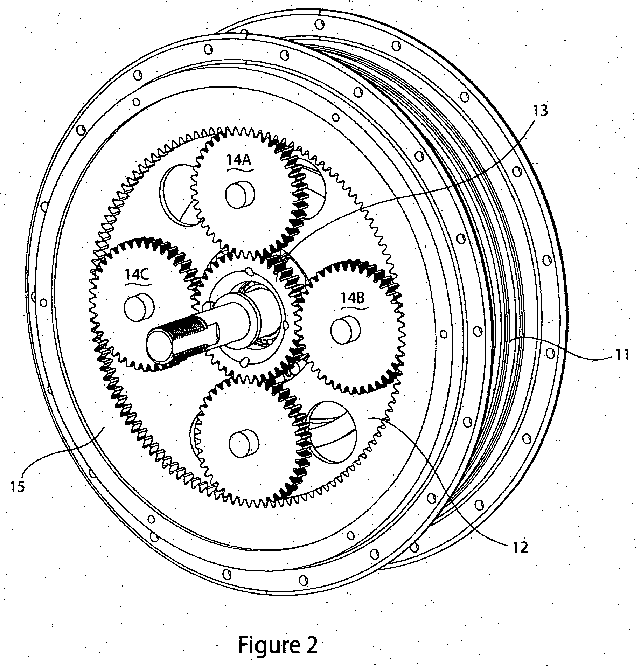

Figure 2 shows a shows the system in a perspective view of the gear system 10 having a first outer rotor body 11 and a planetary gear system 12, having a sun gear 13 and planet gears 14A, 14B and 14C, each of which are in a fixed position, within a ring rear (annulus gear) 15. Whilst this particular system shows three planet gears it is considered with the scope of the invention to have as few as two planetary gears.

In figure 2 there is a cut away representation of the gear system 10, showing a first overrunning clutch system 20 located around the input shaft 22. The overrunning clutch system 20 being capable of engaging the inner surface 26 of the sun gear 13 when activated. As the input shaft 22 rotates in an anti-clockwise direction, the locking rollers 27, which are individually spring loaded, transfer the drive from the input shaft 22 to the inner surface 26 of the sun gear 13.

Within the second rotor body 11 there is a first rotor body 23. The inner rotor body 23 is driven by a motor unit (not shown for clarity) such as an electric motor, and this is where all movements start.

A second overrunning clutch 30 is positioned towards an outer adjacent surface of the second rotor body 11 and has locking rollers 35 residing in the sloping grooves 37 made in the ring 38, which is connected to the ring gear 15.

When the first rotor body 23, which is operatively connected to the input shaft 22, is rotated anticlockwise, for example by a motor, the first overrunning clutch 20 engages with the inner surface 26 of the sun gear 13, which in turn with then drive the ring gear 15 via rotation of the planetary gears 14 that it is intermeshed with. As the planetary gears 14 rotate they then in turn rotate the ring gear 15, which then drives the second rotor body 11 in a clockwise direction.

When the first rotor body 23 is rotated clockwise, the first overrunning clutch 20 will be in overrunning mode and no force will be transferred over to the sun gear 13. However, as the second overrunning clutch 30 is connected to the first rotor body 23, the clockwise rotation will force the rollers 35 to engage with the inner surface of the second rotor body 11 causing it also to rotate in a clockwise direction.

However, this will also result in the ring gear 15 rotating in a clockwise direction and thus the sun gear 13 will also rotate in an anticlockwise direction but this will then put the first overrunning clutch 20 into overrunning mode so as not to apply any drive to the input shaft 22.

So, in the instance wherein drive power is supplied via the rotation of the first rotor body 23 in a clockwise manner the end result is that drive is supplied to the second rotor body 11 via the overrunning clutch 30, which in turn assists propulsion of the vehicle to which it is operatively connected. For example the first rotor body 23 being connected to a rear wheel of a bicycle.

In the instance where the first rotor body 23 is rotated in an anticlockwise manner then the first overrunning clutch engages to provide drive to the outer rotor body via the planetary gear system. The second overrunning clutch then is in overrunning mode and has not interaction with the first rotor body 23.

As the second rotor body 11 is operatively connected to the vehicle either directly or via a drive chain such as on a bicycle, then drive is therefor provided to the vehicle when the first rotor body is rotated in either a clockwise or anticlockwise direction by the rotation of the motor.

Further more, a set of drive pedals may be coupled to the input axle 22 and when operated in a clockwise direction also then provide drive to the second rotor body 11.

One of the advantages of this invention is that by use of the forward and reverse rotation of the motor, with a fixed position of the planetary gear, the input and output reverse rotating speed characteristics of the planetary gear train, regardless of whether the motor is rotating forward or reverse, the rotational direction of the wheels is unchanged. All control components are installed inside the motor, and as such the structure is very compact compared to those devices presently available.

Various modifications may be made in details of design and construction [and process steps, parameters of operation etc] without departing from the scope and ambit of the invention.

## Claims

1. A derailleur for an electric vehicle, including a first rotor body (23) and a second rotor body (11);
a planetary gear set (12) comprising a sun gear (13), a ring gear (15) and a plurality of planetary gears (14A,14B, 14C);
an input shaft (22);
a first overrunning clutch (20) between the sun gear (13) and the input shaft (22);
a second overrunning clutch (30) connected to the first rotor body (23) between the first rotor body (23) and the second rotor body (11),
a motor adapted to be operatively connected to the first rotor body (23) which in turn is operatively connected to the input shaft (22) to provide a driving force thereto,
wherein when the motor drives the first rotor body (23) in a clockwise direction the first overrunning clutch (20) drives the planetary gear set (12) such that the second rotor body (11) will then rotate in a clockwise direction, while the second overrunning clutch (30) is in overrunning mode, and
wherein when the motor drives the first rotor body (23) in an anticlockwise direction, the first overrunning clutch (20) is in overrunning mode and the second overrunning clutch (30) is in drive mode providing drive to the second rotor body (11) causing it to rotate in a clockwise direction.

2. The derailleur as claimed in claim 1, wherein the ring gear (15) is co-axially fixed to the second rotor body (11).

3. The derailleur as claimed in claim 2, wherein second overrunning clutch (30) fits within the first overrunning clutch (20).

4. The derailleur as claimed in claim 3, wherein the ring gear (15) is operatively connected to the second rotor body (11).

5. The derailleur as claimed in claim 4, wherein second rotor body (11) is in communication with a drive system for a vehicle.

6. The derailleur as claimed in claim 5, wherein drive system is a driving chain wheel of a bicycle

## Patentansprüche

1. Kettenschaltung für ein Elektrofahrzeug, aufweisend einen ersten Rotorkörper (23) und einen zweiten Rotorkörper (11);
einen Planetengetriebesatz (12), der ein Sonnenrad (13), ein Hohlrad (15) und eine Vielzahl von Planetengetrieben (14A,14B, 14C) aufweist;
eine Eingangswelle (22);
eine erste Freilaufkupplung (20) zwischen dem Sonnenrad (13) und der Eingangswelle (22);
eine zweite mit dem ersten Rotorkörper (23) zwischen dem ersten Rotorkörper (23) und dem zweiten Rotorkörper (11) verbundene Freilaufkupplung (30),
einen Motor, der zur Wirkverbindung mit dem ersten Rotorkörper (23) ausgelegt ist, mit dem wiederum die Eingangswelle (22) wirkverbunden ist, um dafür eine Antriebskraft bereitzustellen,
wobei, wenn der Motor den ersten Rotorkörper (23) im Uhrzeigersinn antreibt, die erste Freilaufkupplung (20) den Planetengetriebesatz (12) so antreibt, dass sich der zweite Rotorkörper (11) dann im Uhrzeigersinn dreht, während sich die zweite Freilaufkupplung (30) im Freilaufmodus befindet, und
wobei, wenn der Motor den ersten Rotorkörper (23) entgegen dem Uhrzeigersinn antreibt, sich die erste Freilaufkupplung (20) im Freilaufmodus befindet und sich die zweite Freilaufkupplung (30) im Antriebsmodus befindet, wobei für den zweiten Rotorkörper (11) ein Antrieb vorgesehen ist, der bewirkt, dass er sich im Uhrzeigersinn dreht.

2. Kettenschaltung nach Anspruch 1, wobei das Hohlrad (15) koaxial mit dem zweiten Rotorkörper (11) fixiert ist.

3. Kettenschaltung nach Anspruch 2, wobei die zweite Freilaufkupplung (30) in die erste Freilaufkupplung (20) hineinpasst.

4. Kettenschaltung nach Anspruch 3, wobei das Hohlrad (15) mit dem zweiten Rotorkörper (11) wirkverbunden ist.

5. Kettenschaltung nach Anspruch 4, wobei der zweite Rotorkörper (11) mit einem Antriebssystem für ein Fahrzeug in Verbindung steht.

6. Kettenschaltung nach Anspruch 5, wobei das Antriebssystem ein Antriebskettenrad eines Fahrrads ist.

## Revendications

1. Dérailleur pour véhicule électrique, comprenant un premier corps de rotor (23) et un deuxième corps de rotor (11),
un train d'engrenages planétaires (12) comprenant un engrenage solaire (13), une couronne (15) et une pluralité de engrenages planétaires (14A, 14B, 14C),
un arbre d'entrée (22),
un premier embrayage de rattrapage (20) entre l'engrenage solaire (13) et l'arbre d'entrée (22),
un deuxième embrayage de rattrapage (30) connecté au premier corps de rotor (23) entre le premier corps de rotor (23) et le deuxième corps de rotor (11),
un moteur adapté pour être connecté de manière opérationnelle au premier corps de rotor (23) qui à son tour est connecté de manière opérationnelle à l'arbre d'entrée (22) pour lui fournir une force d'entraînement,
dans lequel lorsque le moteur entraîne le premier corps de rotor (23) dans le sens des aiguilles d'une montre, le premier embrayage de rattrapage (20) entraîne le train d'engrenages planétaires (12) de manière à ce que le deuxième corps de rotor (11) va alors tourner dans le sens des aiguilles d'une montre, pendant que le deuxième embrayage de rattrapage (30) est en mode de rattrapage, et
dans lequel lorsque le moteur entraîne le premier corps de rotor (23) dans le sens inverse des aiguilles d'une montre, le premier embrayage de rattrapage (20) est en mode de rattrapage et le deuxième embrayage de rattrapage (30) est en mode d'entraînement assurant l'entraînement du deuxième corps de rotor (11) provoquant sa rotation dans le sens des aiguilles d'une montre.

2. Dérailleur selon la revendication 1, dans lequel la couronne (15) est fixée de manière co-axiale au deuxième corps de rotor (11).

3. Dérailleur selon la revendication 2, dans lequel le deuxième embrayage de rattrapage (30) est disposé à l'intérieur du premier embrayage de rattrapage (20).

4. Dérailleur selon la revendication 3, dans lequel la couronne (15) est connectée de manière opérationnelle au deuxième corps du rotor (11).

5. Dérailleur selon la revendication 4, dans lequel le deuxième corps de rotor (11) est en communication avec un système d'entraînement pour un véhicule.

6. Dérailleur selon la revendication 5, dans lequel le système d'entraînement est un plateau de la chaîne d'entraînement d'une bicyclette.
